# EUROPÄISCHE PATENTSCHRIFT

(11) **EP 2 064 465 B1**
(45) Veröffentlichungstag und Bekanntmachung des Hinweises auf die Patenterteilung: **08.12.2010**
(21) Anmeldenummer: 07788409.6
(22) Anmeldetag: 14.08.2007
(51) Int. Cl.: F16H 55/14

(54) **GETRIEBEVORRICHTUNG**
TRANSMISSION DEVICE
DISPOSITIF DE TRANSMISSION

(30) Priorität: 08.09.2006 DE 102006042341
(43) Veröffentlichungstag der Anmeldung: 03.06.2009
(73) Patentinhaber: Robert Bosch GmbH, 70442 Stuttgart (DE)
(72) Erfinder: TASCH, Franz, 76287 Rheinstetten (DE); HAUSSECKER, Walter, 77830 Buehlertal (DE); THOENE, Holger, 76437 Rastatt (DE); HERTWECK, Volker, 76532 Baden-Baden (DE); BOHR, Peter, 76137 Karlsruhe (DE); FIEDLER, Max, 77833 Ottersweier-Unzhurst (DE); DEPNER, Dieter, 76547 Sinzheim (DE)
(86) Internationale Anmeldenummer: PCT/EP2007/058389
(87) Internationale Veröffentlichungsnummer: WO 2008/028765

(56) Entgegenhaltungen:
- EP-A- 0 761 271
- EP-A- 1 577 587
- CH-A- 108 771
- DE-A1- 2 533 477
- DE-A1- 19 840 036
- DE-A1-102004 006 602
- US-A- 3 236 066
- US-A- 5 214 975
- US-A- 5 725 449
- US-A1- 2004 082 390

## Beschreibung

### Stand der Technik

Die Erfindung betrifft eine Getriebevorrichtung gemäß dem Oberbegriff des Anspruches 1.

Derartige Getriebevorrichtungen werden insbesondere in Verstelleinrichtungen in Kraftfahrzeugen wie elektrischen Fensterhebern oder Schiebedächern, welche mittels eines Elektromotors betrieben werden, eingesetzt. Hierbei wird insbesondere ein Elektromotor verwendet, welcher über ein Getriebe, z.B. das Fenster zwischen einer Öffnungs- und Schließ-Endstellung verstellt. Da es bei der Betätigung beim Anlaufen des Elektromotors oder beim Anschlagen an einer Endstellung zu Schwingungen und/oder unerwünschten Stoßbelastungen kommen kann, ist es bekannt, zwischen zwei axial benachbarten Getrieberädern Dämpfungselemente anzuordnen. Eine solche Getriebevorrichtung ist als Stand der Technik in der DE 102 46 711 A1 beschrieben. Bei der bekannten Getriebevorrichtung wird von einem Stirnrad eine Kraft in Umfangsrichtung mittels der Dämpfungselemente auf ein Mitnehmerrad übertragen. Beim Anschlagen an eine Endstellung oder bei Stoßbelastungen werden die Dämpfungselemente in Umfangsrichtung gestaucht, wodurch sich diese in axialer Richtung aufweiten. Hierdurch werden die beiden Getrieberäder auseinandergedrückt, was eine hohe mechanische Belastung für die Bauteile, insbesondere für die Lager, mit sich bringt.

Aus der unveröffentlichten DE 10 2006 014 763 ist ein Getrieberad bekannt, welches aus einem Nabenkörper und einem radial beabstandeten Zahnkranzkörper besteht, die über ein verformbares Dämpfungselement miteinander verbunden sind. Das Dämpfungselement wird beim Betrieb des Zahnrades auf Torsion beansprucht. Weiterhin ist aus der Druckschrift bekannt, an dem Nabenkörper einen zweiten, axial zu dem ersten Zahnradkörper beabstandeten zweiten Zahnradkörper über ein Dämpfungselement zu befestigen, wobei der zweite Zahnradkörper ebenfalls radial beabstandet zu dem Nabenkörper angeordnet ist. Auch das dem zweiten Zahnradkörper mit dem Nabenkörper verbindende Dämpfungselement wird beim Betrieb des Zahnrades auf Torsion belastet

Mit der gattungsbildenden US-A-5 214 975 ist eine Kupplungsvorrichtung bekannt geworden, bei der axiale Fortsätze zweier unterschiedlicher Getrieberäder in ein ringförmiges Dämpfelement eingreifen. Dabei ist jeder axiale Fortsatz in einer eigenen separaten axialen Öffnung im Dämpfring angeordnet. Das Dämpfelement wird auf Druck und auf Zug belastet.

### Offenbarung der Erfindung

### Technische Aufgabe

Der Erfindung liegt die Aufgabe zugrunde, eine Getriebevorrichtung mit zwei axial nebeneinander angeordneten Getrieberädern vorzuschlagen, zwischen denen mindestens ein Dämpfungselement angeordnet ist, wobei im Dämpfungsfall ein axiales Auseinanderdrücken der Getrieberäder verhindert wird.

### Technische Lösung

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, das mindestens eine Dämpfungselement derart anzuordnen, dass dieses beim Betrieb der Getriebevorrichtung (Abtriebsvorrichtung) nicht auf Druck, sondern, vorzugsweise ausschließlich, in Umfangsrichtung auf Zug belastet wird. Hierdurch wird das Dämpfungselement nicht gestaucht und kann sich dadurch nicht in axialer Richtung verbreitern. Das Dämpfungselement wird bei Zugbelastung gestreckt und dadurch in axialer Richtung sogar geschmälert. Im Vergleich zum Stand der Technik entsteht keine in axialer Richtung wirkende Kraft, die bestrebt ist, die beiden Getrieberäder auseinander zu drücken. Hierdurch wird die mechanische Belastung der Getrieberäder sowie von deren Lagerung vermindert. Bevorzugt werden die Dämpfungselemente auch nicht auf Torsion belastet, was deren Lebensdauer deutlich erhöht. Beide Getrieberäder weisen jeweils mindestens einen axialen Fortsatz auf, wobei die beiden Fortsätze in eine gemeinsame korrespondierende Öffnung, insbesondere eine axiale Durchgangsöffnung, des Dämpfungselements eingreifen.

In Weiterbildung der Erfindung ist nicht nur ein einziges Dämpfungselement vorgesehen, sondern es sind mehrere, vorzugsweise drei in Umfangsrichtung voneinander beabstandete Dämpfungselemente axial zwischen den Grieberädern angeordnet. Um eine gleichmäßige Kraftverteilung zu gewährleisten, ist in Ausgestaltung der Erfindung mit Vorteil vorgesehen, dass die Dämpfungselemente gleichmäßig in Umfangsrichtung verteilt angeordnet sind.

Um eine Drehmomentübertragung zwischen den beiden Getrieberädern zu ermöglichen, und um dabei das mindestens eine Dämpfungselement auf Zug zu belasten, ist gemäß einer zweckmäßigen Weiterbildung vorgesehen, dass beide Getrieberäder in axialer Richtung formschlüssig mit dem Dämpfungselement verbunden sind, so dass Kräfte in Umfangsrichtung übertragen werden können. Hierzu muss die formschlüssige Verbindung bzw. die die formschlüssige Verbindung herstellenden Abschnitte zwischen Getrieberad und Dämpfungselement nicht zwangsläüfig formkongruent ausgebildet sein, was jedoch von Vorteil wäre.

Eine Möglichkeit zur Realisierung eines axialen Formschlusses, der eine Kraftübertragung in Umfangsrichtung ermöglicht, besteht darin, an beiden Getrieberädern jeweils mindestens einen in axialer Richtung weisenden Fortsatz vorzusehen, welcher in eine korrespondierende Öffnung im Dämpfungselement eingreift. Wird eines der Getrieberäder angetrieben, so legt sich der Fortsatz an eine Innenwand der Öffnung an und überträgt damit eine Kraft auf das Dämpfungselement, welches wiederum eine Kraft auf das axial benachbarte Getrieberad in Umfangsrichtung überträgt. Weiterhin ist es denkbar, dass die Fortsätze der beabstandeten Getrieberäder in Umfangsrichtung beabstandete Öffnungen, vorzugsweise Durchgangsöffnungen des Dämpfungselementes, eingreifen.

Bevorzugt werden als Dämpfungselemente Gummi- und/oder Kunststoffelemente eingesetzt.

Gemäß einer bevorzugten Ausführungsform ist vorgesehen, dass das Dämpfungselement zwei in Umfangsrichtung beabstandete Durchgangsöffnungen aufweist. Jedes Getrieberad greift mit jeweils einem Fortsatz in jede Öffnung ein. Dabei umklammern bevorzugt die Fortsätze des einen Getrieberades die Fortsätze des anderen Getrieberades, wobei zwischen zwei Fortsätzen innerhalb einer Durchgangsöffnung jeweils ein Radialspalt vorgesehen ist. Wird eines der Getrieberäder in Drehung versetzt, so wird das Dämpfungselement in Umfangsrichtung gedehnt und ein Drehmoment wird über das Dämpfungselement an das axial gegenüberliegende Getrieberad übertragen. Sollte es zu einem Reißen des Dämpfungselementes oder zu einer Überdehnung desselben kommen, so ist aufgrund der klammernden Anordnung der Fortsätze gewährleistet, dass die Drehbewegung, wenn dann auch ungedämpft, nicht endet, sondern die Kräfte zwischen den Getrieberädern weiterhin übertragen werden können, da in diesem Fall die in einer der Öffnungen benachbarten Fortsätze zur Anlage aneinander kommen und eine ungedämpfte Kraftübertragung sicherstellen.

Zusätzlich oder alternativ zu einem axialen Fortsatz an mindestens einem der Getrieberäder, der in eine korrespondierende Öffnung des Dämpfungselementes eingreift, kann an dem Dämpfungselement ein axialer Fortsatz, insbesondere aus nicht dämpfendem Material, vorgesehen werden, welcher in eine entsprechende Öffnung mindestens eines Getrieberades eingreift. Bevorzugt sind an beiden in axialer Richtung gegenüberliegenden Seiten des Dämpfungselementes axiale Fortsätze vorgesehen, mit denen das Dämpfungselement in entsprechende Öffnungen in beiden Getrieberädern eingreift.

Bevorzugt ist eines der Getrieberäder als Stirnrad mit einer Außenverzahnung und das axial benachbarte Getrieberad als Mitnehmer ausgebildet. Derartig ausgebildete Getriebevorrichtungen eignen sich besonders für den Einsatz in Verstelleinrichtungen in Kraftfahrzeugen. Bevorzugt weist der Mitnehmer eine Außenverzahnung oder sonstige Formschlussmittel auf, auf die beispielsweise eine Seiltrommel der Verstelleinrichtung aufsteckbar ist. Weiterhin ist es von Vorteil, wenn der Mitnehmer in axialer Richtung auf das Stirnrad aufsteckbar ist, wobei bei dem Aufsteckvorgang das Dämpfungselement zwischen den beiden Getrieberädern aufgenommen wird.

Vorzugsweise handelt es sich bei den Dämpfungselementen um separate Bauteile, also nicht um eine die Getrieberäder verklebende Masse. Hierdurch lassen sich diese demontieren, also austauschen, ohne dabei die Getriebevorrichtung zu zerstören. Mit Vorteil sind die Dämpfungselemente in Taschen mindestens eines Getrieberades aufgenommen, wobei zwei in Umfangsrichtung benachbarte Taschen durch mindestens einen Radialsteg voneinander getrennt sind.

### Kurze Beschreibung der Zeichnungen

Weitere Vorteile und zweckmäßige Ausführungen der Erfindung sind in den weiteren Ansprüchen, der Figurenbeschreibung und der Zeichnung erläutert. Es zeigen:
- Fig. 1:: eine Explosionsdarstellung einer Getriebevorrichtung, umfassend zwei Getrieberäder und drei in Umfangsrichtung beabstandete Dämpfungselemente,
- Fig. 2:: eine Frontansicht auf eine montierte Getriebevorrichtung,
- Fig. 3:: eine Schnittdarstellung entlang der Schnittlinie A-A gemäß Fig. 2,
- Fig. 4:: eine Draufsicht auf ein Getrieberad mit drei Dämpfungselementen ohne eingesetztes zweites Getrieberad,
- Fig. 5:: eine perspektivische Ansicht einer montierten Getriebevorrichtung.

### Ausführungsform der Erfindung

In den Figuren sind gleiche Bauteile und Bauteile mit gleichen Funktionen und den gleichen Bezugszeichen gekennzeichnet.

Die in den Figuren gezeigte Getriebevorrichtung 1 umfasst ein als Stirnrad ausgebildetes erstes Getrieberad 2 und ein axial benachbartes, als Mitnehmer ausgebildetes zweites Getrieberad 3. Zwischen dem ersten Getrieberad 2 und dem zweiten Getrieberad 3 sind drei um jeweils 120° in Umfangsrichtung versetzt angeordnete Dämpfungselemente 4 vorgesehen. Die Dämpfungselemente 4 dienen zur Dämpfung in Umfangsrichtung sowie zur Drehmomentübertragung zwischen den beiden Getrieberädern 2, 3. Beim Betrieb der Getriebevorrichtung werden die Dämpfungselemente 4 von den Getrieberädern 2, 3 in Umfangsrichtung ausschließlich auf Zug belastet.

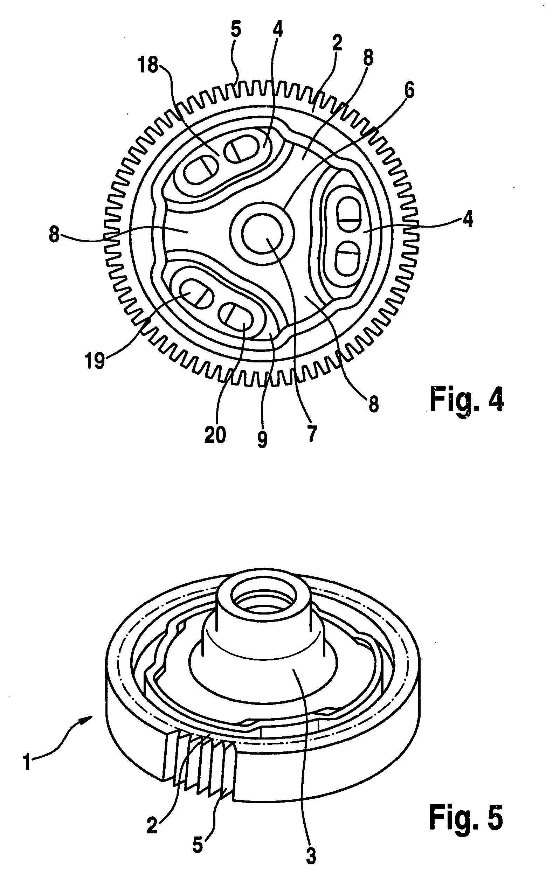

Das als Stirnrad ausgebildete erste Getrieberad 2 ist mit einer Außenverzahnung 5 versehen sowie mit einer koaxial hierzu angeordneten inneren Radnabe 6 mit einer zentrischen Durchgangsbohrung 7 zur Lagerung der Getriebevorrichtung 1 auf einem nicht gezeigten Lagerbolzen. Zwischen der Radnabe 6 und der Außenverzahnung 5 erstrecken sich in radialer Richtung drei in Umfangsrichtung benachbarte Radialstege 8, die zwischen sich drei in Umfangsrichtung beabstandete Aufnahmetaschen 9 für die Dämpfungselemente 4 bilden (vgl. insbesondere Fig. 4).

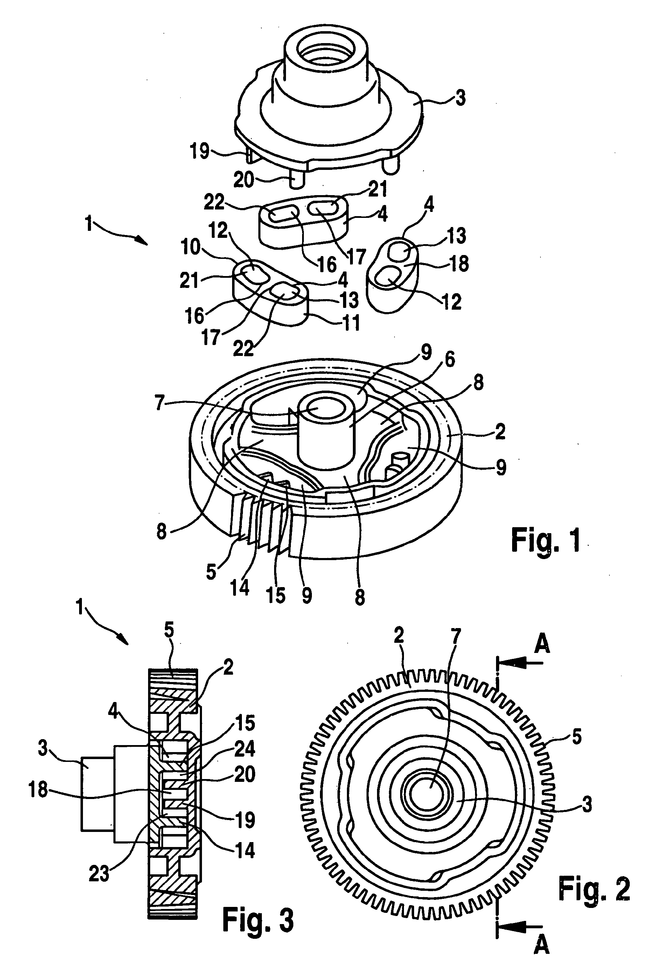

Jedes Dämpfungselement 4 ist leicht gekrümmt ausgebildet und weist in Umfangsrichtung gerichtete abgerundete Enden 10, 11 auf. Innerhalb jedes Dämpfungselementes 4 sind zwei in Umfangsrichtung beabstandete, längliche, als Durchgangsöffnungen ausgebildete Öffnungen 12, 13 vorgesehen. Jede Öffnung 12, 13 nimmt jeweils einen axialen Fortsatz 14, 15 des ersten Getrieberades auf, wobei die beiden axialen Fortsätze 14, 15 des ersten Getrieberades 2 an den benachbarten, inneren, einander zugewandten Bereichen 16, 17 der Öffnungen 12, 13 anliegen. Die beiden axialen Fortsätze 14, 15 sind voneinander durch einen Radialsteg 18 des Dämpfungselementes 4 getrennt. In jede Öffnung 12, 13 des Dämpfungselementes 4 ist zusätzlich zu einem axialen Fortsatz 14, 15 des ersten Getrieberades 2 ein axialer Fortsatz 19, 20 des zweiten Getrieberades 3 aufgenommen. Diese Fortsätze 19, 20 sind in den in Umfangsrichtung äußeren, voneinander weg weisenden Bereichen 21, 22 der Öffnungen 12, 13 angeordnet, wobei, wie insbesondere aus Fig. 3 ersichtlich ist, zwischen den zwei benachbarten axialen Fortsätzen 14, 19 und 15, 20 innerhalb jeder Öffnung 12, 13 jeweils ein Radialspalt 23, 24 gebildet ist, der eine Streckung des Dämpfungselementes 4 unabhängig von der Drehrichtung in Umfangsrichtung zulässt. Erfolgt eine Überdehnung des Dämpfungselementes 4 oder gar ein Ausreißen einer Öffnung 12, 13, gewährleistet die klammernde Anordnung der axialen Fortsätze 19, 20; 14, 15, dass je nach Drehrichtung entweder die axialen Fortsätze 14, 19 oder 15, 20 aneinander anliegen und somit ein Weiterdrehen der Getriebevorrichtung 1 gewährleisten.

Denkbar ist auch, dass beispielsweise in die Öffnung 12 lediglich der axiale Fortsatz 19 und in die Öffnung 13 lediglich der axiale Fortsatz 15 des ersten Stirnrades eingreift. Auch dann wäre eine Beanspruchung in das Dämpfungselement 4 in Umfangsrichtung gegeben, jedoch nur bei einer Drehbewegung im Uhrzeigersinn (Fig. 1). Durch die in den Figuren 1 bis 5 dargestellte Anordnung der Fortsätze 14, 15, 19, 20 wird eine Beanspruchung der Dämpfungselemente 4 ausschließlich auf Zug unabhängig von der Drehrichtung der Getriebevorrichtung gewährleistet, was insbesondere für den Einsatz in Verstelleinrichtungen aufgrund der ständig wechselnden Drehrichtung von Vorteil ist.

Bei dem gezeigten Ausführungsbeispiel werden die Dämpfungselemente ausschließlich auf Zug belastet. Eine Druckbelastung sowie eine Torsionsbelastung scheiden mit Vorteil aus.

## Patentansprüche

1. Getriebevorrichtung, umfassend ein erstes Getrieberad (2) und ein drehbar mit diesem gekoppeltes zweites Getrieberad (3), wobei axial zwischen den Getrieberädern (2, 3) mindestens ein in Umfangsrichtung wirkendes Dämpfungselement (4) vorgesehen ist, wobei das Dämpfungselement (4) von den Getrieberädern (2, 3) beim Betrieb der Getriebevorrichtung (1) auf Zug beanspruchbar ist. **dadurch gekennzeichnet, dass** beide Getrieberäder (2, 3) je mindestens einen axialen Fortsatz (14, 15; 19, 20) aufweisen, wobei die beiden Fortsätze (14,19; 15, 20) in eine gemeinsame korrespondierende Öffnung (12, 13) des Dämpfungselementes (4) eingreifen, wobei zwischen den zwei benachbarten axialen Fortsätzen (14,19) und (15, 20) innerhalb jeder Öffnung (12, 13) jeweils ein Radialspalt (23, 24) gebildet ist, der eine Streckung des Dämpfungselementes (4) unabhängig von der Drehrichtung in Umfangsrichtung zulässt

2. Getriebevorrichtung nach Anspruch 1, **dadurch gekennzeichnet, dass** das Dämpfungselement (4) in beide Drehrichtungen auf Zug beanspruchbar ist.

3. Getriebevorrichtung nach einem der Ansprüche 1 oder 2, **dadurch gekennzeichnet, dass** mehrere, vorzugsweise drei, Dämpfungselemente (4) vorgesehen und, vorzugsweise gleichmäßig, über den Umfang verteilt angeordnet sind.

4. Getriebevorrichtung nach einem der vorhergehenden Ansprüche, **dadurch gekennzeichnet, dass** jedes Getrieberad (2, 3) in axialer Richtung, vorzugsweise ausschließlich, formschlüssig mit dem Dämpfungselement (4) verbunden ist.

5. Getriebevorrichtung nach einem der vorhergehenden Ansprüche, **dadurch gekennzeichnet, dass** mindestens ein Getrieberad (2, 3) mindestens einen in axialer Richtung weisenden Fortsatz (14, 15; 19, 20) aufweist, der in eine korrespondierende Öffnung (12, 13) im Dämpfungselement (4) eingreift.

6. Getriebevorrichtung nach einem der vorhergehenden Ansprüche, **dadurch gekennzeichnet, dass** die beiden Fortsätze (14, 19; 15, 20) in eine axiale Durchgangsöffnung des Dämpfungselementes (4) eingreifen.

7. Getriebevorrichtung nach einem der vorhergehenden Ansprüche, **dadurch gekennzeichnet, dass** das Dämpfungselement (4) zwei in Umfangsrichtung beabstandete Öffnungen (12, 13) aufweist, und dass beide Getrieberäder (2, 3) in jede Öffnung (12, 13) mit jeweils einem axialen Fortsatz (14, 19; 15, 20) eingreifen, wobei zwischen zwei Fortsätzen (14, 19; 15, 20) in einer Öffnung (12,13) ein Radialspalt (23, 24) vorgesehen ist, und dass die Fortsätze (14, 15) des ersten Getrieberades (2) in den in Umfangsrichtung voneinander weg gerichteten äußeren Bereichen (21, 22) der Öffnungen (12, 13) und die Fortsätze (19, 20) des zweiten Getrieberades (3) in den in Umfangsrichtung benachbarten inneren Bereichen (16, 17) der Öffnungen (12, 13) angeordnet sind.

8. Getriebevorrichtung nach einem der vorhergehenden Ansprüche, **dadurch gekennzeichnet, dass** das Dämpfungsmittel (4) mindestens einen in axialer Richtung weisenden Fortsatz aufweist, der in eine korrespondierende Öffnung in einem der Getrieberäder (2, 3) eingreift.

9. Getriebevorrichtung nach einem der Ansprüche, **dadurch gekennzeichnet, dass** eines der Getrieberäder (2, 3) als Stirnrad mit einer Außenverzahnung (5) und das andere Getrieberad (3, 2), insbesondere als axial aufsteckbarer, Mitnehmer, vorzugsweise mit integral ausgebildetem Ritzel, ausgebildet ist.

10. Getriebevorrichtung nach einem der vorhergehenden Ansprüche, **dadurch gekennzeichnet, dass** das Dämpfungselement (4) als eigenständiges, demontierbares Bauteil ausgebildet ist.

## Claims

1. Transmission device, comprising a first transmission gear (2) and a second transmission gear (3) rotatably coupled to said first transmission gear (2), with at least one damping element (4) which acts in the circumferential direction being provided axially between the transmission gears (2, 3), with it being possible for the damping element (4) to be loaded under tension by the transmission gears (2, 3) during operation of the transmission device (1), **characterized in that** the two transmission gears (2, 3) have in each case at least one axial projection (14, 15; 19, 20), with the two projections (14, 19; 15, 20) engaging into a common corresponding opening (12, 13) of the damping element (4), with in each case one radial gap (23, 24) being formed between the two adjacent axial projections (14, 19) and (15, 20) within each opening (12, 13), which radial gap (23, 24) permits an elongation of the damping element (4) in the circumferential direction regardless of the rotational direction.

2. Transmission device according to Claim 1, **characterized in that** the damping element (4) can be loaded under tension in both rotational directions.

3. Transmission device according to one of Claims 1 and 2, **characterized in that** a plurality of, preferably three, damping elements (4) are provided and are arranged so as to be distributed, preferably uniformly, over the circumference.

4. Transmission device according to one of the preceding claims, **characterized in that** each transmission gear (2, 3) is connected in the axial direction preferably exclusively in a positively locking manner to the damping element (4).

5. Transmission device according to one of the preceding claims, **characterized in that** at least one transmission gear (2, 3) has at least one projection (14, 15; 19, 20) which points in the axial direction and which engages into a corresponding opening (12, 13) in the damping element (4).

6. Transmission device according to one of the preceding claims, **characterized in that** the two projections (14, 19; 15, 20) engage into one axial passage opening of the damping element (4).

7. Transmission device according to one of the preceding claims, **characterized in that** the damping element (4) has two openings (12, 13) which are spaced apart in the circumferential direction, and **in that** the two transmission gears (2, 3) engage with in each case one axial projection (14, 19; 15, 20) into each opening (12, 13), with a radial gap (23, 24) being provided between two projections (14, 19; 15, 20) in an opening (12, 13), and **in that** the projections (14, 15) of the first transmission gear (2) are arranged in the outer regions (21, 22), which point away from one another in the circumferential direction, of the openings (12, 13) and the projections (19, 20) of the second transmission gear (3) are arranged in the inner regions (16, 17), which are adjacent in the circumferential direction, of the openings (12, 13).

8. Transmission device according to one of the preceding claims, **characterized in that** the damping element (4) has at least one projection which points in the axial direction and which engages into a corresponding opening in one of the transmission gears (2, 3).

9. Transmission device according to one of the preceding claims, **characterized in that** one of the transmission gears (2, 3) is designed as a spur gear with an external toothing (5) and the other transmission gear (3, 2) is designed as a driver which can in particular be plugged on axially and which preferably has an integrally formed pinion.

10. Transmission device according to one of the preceding claims, **characterized in that** the damping element (4) is formed as a separate, detachable component.

## Revendications

1. Dispositif de transmission comprenant une première roue de transmission (2) et une deuxième roue de transmission (3) accouplée à celle-ci de manière rotative, au moins un élément d'amortissement (4) agissant dans la direction périphérique étant prévu axialement entre les roues de transmission (2, 3), l'élément d'amortissement (4) pouvant être sollicité en traction par les roues de transmission (2, 3) lors du fonctionnement du dispositif de transmission (1), **caractérisé en ce que** les deux roues de transmission (2, 3) présentent chacune au moins une saillie axiale (14, 15 ; 19, 20) les deux saillies (14, 19 ; 15, 20) venant en prise dans une ouverture commune correspondante (12, 13) de l'élément d'amortissement (4), une fente radiale (23, 24) étant à chaque fois formée entre les deux saillies axiales adjacentes (14, 19) et (15, 20) à l'intérieur de chaque ouverture (12, 13), ladite fente radiale permettant un étirage de l'élément d'amortissement (4) indépendamment du sens de rotation dans la direction périphérique.

2. Dispositif de transmission selon la revendication 1, **caractérisé en ce que** l'élément d'amortissement (4) peut être sollicité en traction dans les deux sens de rotation.

3. Dispositif de transmission selon l'une quelconque des revendications 1 ou 2, **caractérisé en ce que** plusieurs éléments d'amortissement (4), de préférence trois, sont prévus et de préférence sont disposés uniformément de manière répartie sur la circonférence.

4. Dispositif de transmission selon l'une quelconque des revendications précédentes, **caractérisé en ce que** chaque roue de transmission (2, 3) est connectée dans la direction axiale, de préférence exclusivement, par engagement par coopération de forme avec l'élément d'amortissement (4).

5. Dispositif de transmission selon l'une quelconque des revendications précédentes, **caractérisé en ce qu'**au moins une roue de transmission (2, 3) présente au moins une saillie (14, 15 ; 19, 20) tournée dans la direction axiale, laquelle vient en prise dans une ouverture correspondante (12, 13) dans l'élément d'amortissement (4).

6. Dispositif de transmission selon l'une quelconque des revendications précédentes, **caractérisé en ce que** les deux saillies (14, 19 ; 15, 20) viennent en prise dans une ouverture de passage axiale de l'élément d'amortissement (4).

7. Dispositif de transmission selon l'une quelconque des revendications précédentes, **caractérisé en ce que** l'élément d'amortissement (4) présente deux ouvertures (12, 13) espacées dans la direction périphérique, et **en ce que** les deux roues de transmission (2, 3) viennent en prise dans chaque ouverture (12, 13) avec une saillie axiale respective (14, 19 ; 15, 20), une fente radiale (23, 24) étant prévue dans une ouverture (12, 13) entre deux saillies (14, 19 ; 15, 20), et **en ce que** les saillies (14, 15) de la première roue de transmission (2) sont disposées dans les régions extérieures (21, 22) des ouvertures (12, 13) orientées à l'écart l'une de l'autre dans la direction périphérique, et les saillies (19, 20) de la deuxième roue de transmission (3) sont disposées dans les régions intérieures (16, 17) des ouvertures (12, 13) adjacentes dans la direction périphérique.

8. Dispositif de transmission selon l'une quelconque des revendications précédentes, **caractérisé en ce que** l'élément d'amortissement (4) présente au moins une saillie tournée dans la direction axiale, laquelle vient en prise dans une ouverture correspondante dans l'une des roues de transmission (2, 3).

9. Dispositif de transmission selon l'une quelconque des revendications précédentes, **caractérisé en ce que** l'une des roues de transmission (2, 3) est réalisée sous forme de pignon droit avec une denture extérieure (5) et l'autre roue de transmission (3, 2) est réalisée sous forme de dispositif d'entraînement pouvant être enfiché notamment axialement, de préférence avec un pignon réalisé de manière intégrée.

10. Dispositif de transmission selon l'une quelconque des revendications précédentes, **caractérisé en ce que** l'élément d'amortissement (4) est réalisé sous forme de composant autonome, pouvant être démonté.
